# EUROPÄISCHE PATENTANMELDUNG

(11) **EP 2 290 335 A1**
(43) Veröffentlichungstag der Anmeldung: **02.03.2011**
(21) Anmeldenummer: 10005636.5
(22) Anmeldetag: 31.05.2010
(51) Int. Cl.: G01F 23/24

(54) **Anordnung zur Füllstandsmessung**

(30) Priorität: 27.08.2009 DE 102009038744
(71) Anmelder: Albonair GmbH, 44263 Dortmund (DE)
(72) Erfinder: Adler, Sebastian, 44227 Dortmund (DE); Bleicker, Dirk, 58675 Hemer (DE)
(74) Vertreter: Methling, Frank-Oliver

(57) **Zusammenfassung**

Die Erfindung betrifft eine Anordnung zur Füllstandsmessung einer elektrisch leitfähigen Flüssigkeit in einem Behälter, insbesondere zur Füllstandsmessung in einem Reduktionsmitteltank eines Abgasnachbehandlungssystems, wobei eine Mehrzahl von Elektroden (3, 4) in vertikaler Richtung (2) übereinander voneinander beabstandet angeordnet sind, sodass aus einer durch die Überbrückung des Abstandes zwischen zwei Elektroden (3, 4) mit der leitfähigen Flüssigkeit resultierenden Änderung der elektrischen Potentialdifferenz zwischen den beiden Elektroden (3, 4) der Füllstand ableitbar ist, wobei die Elektroden (3, 4) über Leiterbahnen (7, 8) mit Anschlüssen verbunden sind, wobei die Elektroden (3, 4) und Leiterbahnen (7, 8) in ein flexibles Trägermedium (1) eingebettet sind und die Leiterbahnen (7, 8) dehn- und stauchbar sind.

## Beschreibung

Die Erfindung betrifft eine Anordnung zur Füllstandsmessung einer elektrisch leitfähigen Flüssigkeit in einem Behälter, insbesondere zur Füllstandsmessung in einem Reduktionsmitteltank eines Abgasnachbehandlungssystems, wobei eine Mehrzahl von Elektroden in vertikaler Richtung übereinander voneinander beabstandet angeordnet sind, sodass aus einer durch die Überbrückung des Abstandes zwischen zwei Elektroden mit der leitfähigen Flüssigkeit resultierenden Änderung der elektrischen Potentialdifferenz zwischen den beiden Elektroden der Füllstand ableitbar ist, wobei die Elektroden über Leiterbahnen mit Anschlüssen verbunden sind.

Derartige Anordnungen zur Füllstandsmessung sind bekannt. Insbesondere kommen derartige Anordnungen bei der Überwachung des Füllstandes im Reduktionsmitteltank einer Abgasnachbehandlungsanlage zum Einsatz. Dabei wird mittels der selektiven katalytischen Reduktion (englisch: Selective Catalytic Reduction, abgekürzt SCR) ein Reduktionsmittel in den Abgasstrom mittels eines Dosiersystems eingespritzt, wobei als Reduktionsmittel üblicherweise eine Harnstofflösung zum Einsatz kommt. Diese Harnstofflösung wird bei Kraftfahrzeugen in einem Reduktionsmitteltank mitgeführt, aus dem die Reduktionsmittellösung mittels des Dosiersystems bedarfsweise entnommen und in den Abgasstrom eingedüst wird. Unter Reduktionsmittel bzw. Harnstofflösung soll in diesem Sinne sowohl Ammoniak respektive eine Ammoniaklösung als auch Harnstofflösung und insbesondere eine Harnstofflösung gemäß DIN 70070, das sogenannte Adblue verstanden werden.

Die selektive katalytische Reduktion (abgekürzt SCR - englisch: Selective Catalytic Reduction) bezeichnet die Technik der Reduktion von Stickoxiden in Abgasen von Dieselmotoren von Nutzfahrzeugen, aber auch von sonstigen Feuerungsanlagen, Müllverbrennungsanlagen, Gasturbinen und Industrieanlagen. Die chemische Reaktion am SCR-Katalysator ist selektiv, d. h. es werden bevorzugt die Stickoxide NOx reduziert, während unerwünschte Reaktionen weitgehend unterdrückt werden. Zum Ablauf der Reaktion wird Ammoniak benötigt, der dem Abgas zugemischt wird. Dieses Ammoniak wird in Form einer Harnstofflösung insbesondere gemäß DIN 70070 in den Abgasstrom eindosiert.

Bei dem Einsatz solcher Systeme bei der selektiven katalytischen Reduktion in Nutzfahrzeugen wird gesetzlich eine sogenannte Onboard-Diagnose (OBD) der Funktion des SCR-Katalysatorsystems gefordert. Ferner wird, um einer Manipulation vorzubeugen, gefordert, dass das eingesetzte Reduktionsmittel einer stetigen Qualitätskontrolle unterliegt, um nicht etwa reines Wasser in den Abgasstrom einspritzen zu können.

Es sind Anordnungen zur Füllstandsmessung mit Schwimmern oder mittels eines im Tankboden eingebauten Drucksensors bekannt. Nachteilig ist bei Verwendung eines Drucksensors im Tankboden die aufwendige Abdichtung der Anordnung. Bei Verwendung eines Schwimmers ist nachteilig, dass dieser aufgrund von Verschmutzungen oder Alterungsprozessen in seiner Bewegungsfreiheit eingeschränkt sein kann und somit nicht mehr zuverlässig arbeitet.

Ein weiterer Nachteil bei den bekannten Systemen ist es, dass diese nicht frostsicher sind, da die üblicherweise bei Nutzfahrzeugen mitgeführte Harnstofflösung bei -11°C gefriert, wobei die Dichte der wässrigen Reduktionsmittelösung beim Einfrieren abnimmt, was eine Volumenzunahme in entsprechender Größenordnung zur Folge hat.

Die Aufgabe der Erfindung ist es daher, eine Anordnung zur Füllstandsmessung einer elektrisch leitfähigen Flüssigkeit in einem Behälter bereit zu stellen, die einen einfachen Aufbau aufweist und frostsicher ist.

Diese Aufgabe wird erfindungsgemäß durch eine Anordnung zur Füllstandsmessung gemäß Anspruch 1 sowie einen Reduktionsmittelbehälter gemäß Anspruch 11 gelöst. Vorteilhafte Weiterbildungen der Erfindung sind in den abhängigen Ansprüchen angegeben.

Besonders vorteilhaft bei der erfindungsgemäßen Anordnung zur Füllstandsmessung einer elektrisch leitfähigen Flüssigkeit in einem Behälter, insbesondere zur Füllstandsmessung in einem Reduktionsmitteltank eines Abgasnachbehandlungssystems, wobei eine Mehrzahl von Elektroden in vertikaler Richtung übereinander voneinander beabstandet angeordnet sind, sodass aus einer über die Überbrückung des Abstandes zwischen zwei Elektroden mit der leitfähigen Flüssigkeit resultierenden Änderung der elektrischen Potentialdifferenz zwischen den beiden Elektroden der Füllstand ableitbar ist, wobei die Elektroden über Leiterbahnen mit Anschlüssen verbunden sind, ist es, dass die Elektroden und Leiterbahnen in ein flexibles Trägermedium eingebettet sind und die Leiterbahnen dehn- und stauchbar sind.

Dadurch dass die Elektroden und Leiterbahnen in ein flexibles Trägermedium eingebettet sind und die Leiterbahnen dehn- und stauchbar sind, lässt die gesamte Anordnung Verformungen zu, wie sie beispielsweise bei einer Volumenänderung auftreten können, wenn die wässrige Reduktionsmittellösung gefriert und ihr spezifisches Volumen ändert.

Im Gegensatz zu den vorbekannten Lösungen erfolgt die Füllstandsmessung ohne mechanisch bewegliche Teile. Dabei kann die Anordnung zur Füllstandsmessung direkt im Tank angeordnet sein. Somit ist auch kein für die Dichtheit des Behälters kritischer Verbau eines Sensors im Tankboden erforderlich.

Bei einer ersten bevorzugten Ausführungsform sind jeweils zwei benachbarte Elektroden zu einem Paar von Elektrode und Gegenelektrode zusammengefasst. Bei Anordnung mehrerer derartiger Elektrodenpaare in vertikaler Richtung übereinander ist somit eine stufenweise Erfassung des Füllstandes innerhalb des Behälters möglich, indem die jeweiligen einzelnen Elektrodenpaare ausgewertet werden. Wird ein Elektrodenpaar aus Elektrode und Gegenelektrode durch die elektrisch leitfähige Flüssigkeit überbrückt, so resultiert hieraus eine Änderung der elektrischen Potentialdifferenz zwischen diesen beiden Elektroden des betroffenen Elektrodenpaares. Hierdurch ist es möglich, den Füllstand innerhalb des Behälters in diskreten Schritten zu überwachen.

Bei einer anderen bevorzugten Ausführungsform weisen die in vertikaler Richtung übereinander angeordneten Elektroden eine gemeinsame Gegenelektrode auf. Diese einzelne Gegenelektrode kann sich über die Höhe des Messbereiches der Sensoranordnung erstrecken oder aber im unteren Bereich des Behälters angeordnet sein, sodass diese Gegenelektrode immer von der elektrisch leitfähigen Flüssigkeit benetzt ist.

Durch Auswertung, welche der in vertikaler Richtung übereinander angeordneten Elektroden benetzt ist, kann somit auch bei dieser Ausführungsform in diskreten Schritten die Füllstandshöhe innerhalb des Behälters ermittelt werden.

Vorzugsweise ist das flexible Trägermedium durch ein Elastomer gebildet. Dabei kann es sich insbesondere um Ethylen-Propylen-Dien-Kautschuk handeln.

Durch das flexible Trägermedium, in welches die Elektroden und Leiterbahnen eingebettet sind, wird somit eine biegsame Platine gebildet, d. h. eine Weichkunststoffplatine gebildet. Dadurch dass das flexible Trägermedium biegsam ist, sind Verformungen zugelassen, so dass etwaige auftretende Spannungen und Verformungen nicht zu Beschädigungen führen, sondern von dem flexiblen Trägermedium aufgenommen werden, da auch die darin eingebetteten Leiterbahnen stauch- und dehnbar sind.

Die Leiterbahnen, Elektronen und ggf. weitere Sensorik sind somit auf einer biegsamen Weichkunststoffplatine angeordnet, respektive in diese eingebettet, so dass das flexible Trägermedium gleichzeitig eine elektrische Isolierung gegen die Umgebung und insbesondere gegen ein ggf. korrosives Medium bietet.

In einer besonders bevorzugten Ausführungsform ist in das Trägermedium ferner zumindest ein Sensor zur Messung einer Stoffeigenschaft der Flüssigkeit sowie mit dem Sensor verbundene dehn- und stauchbare Leiterbahnen eingebettet. Über diese Leiterbahnen ist der Sensor über entsprechende Anschlüsse der Leiterbahnen mit einer Auswerteeinheit verbindbar.

Hierdurch ist eine besonders bevorzugte Kombination realisierbar, indem eine Sensoranordnung sowohl zur Füllstandsmessung als auch zur Qualitätsmessung ermöglicht wird, um bei einem Reduktionsmitteltank eines Abgasnachbehandlungssystems sowohl eine ausreichende Füllstandshöhe zu überwachen, als auch die Qualität des eingesetzten Reduktionsmittels, indem mittels des Sensors zur Messung einer Stoffeigenschaft das eingesetzte Reduktionsmittel qualitativ überwacht wird.

In einer bevorzugten Ausführungsform ist in das Trägermedium zumindest ein Sensor zur Messung der elektrischen Leitfähigkeit sowie mit dem Sensor verbundene dehn- und stauchbare Leiterbahnen eingebettet. Über die Anschlüsse der Leiterbahnen ist der Sensor somit mit einer Auswerteeinheit zur weiteren Verarbeitung der Sensorsignale verbindbar.

Die elektrische Leitfähigkeit der Flüssigkeit ist im Falle einer wässrigen Harnstofflösung ein Maß für die Qualität der eingesetzten Harnstofflösung.

Alternativ oder kumulativ kann ferner ein Sensor zur Messung der Schallgeschwindigkeit in der Flüssigkeit sowie mit dem Sensor verbundene dehn- und stauchbare Leiterbahnen eingebettet sein. Über Anschlüsse dieser Leiterbahnen kann der Sensor mit einer Auswerteeinheit zur weiteren Verarbeitung der Sensorsignale verbunden werden.

Ebenso wie die elektrische Leitfähigkeit bildet auch die Schallgeschwindigkeit ein belastbares Kriterium zur Qualitätsüberwachung des eingesetzten Mediums im Reduktionsmitteltank eines Abgasnachbehandlungssystems.

Die Leiterbahnen sind bevorzugt durch biegsame Leiter gebildet, die in Zickzacklinien oder Wellenlinien oder dergleichen in das flexible Trägermedium eingebettet sind. Der Verlauf der Leiter innerhalb des Trägermediums kann somit insbesondere ziehharmonikaförmig, mäanderförmig, rechteckförmig, sägezahnförmig, dreieckförmig oder dergleichen sein, wodurch es gewährleistet wird, dass Biegungen, Streckungen und Stauchungen des flexiblen Trägermediums ausgeglichen werden können, ohne dass die Leiterbahnen dabei beschädigt werden.

Vorzugsweise sind die Elektroden und/oder Sensoren zur Kontaktierung der Flüssigkeit auf dem Trägermedium vorderseitig angeordnet, wobei das Trägermedium rückseitig eine selbstklebende Schicht aufweist.

Hierdurch ist es möglich, das Trägermedium auf eine Innenwand des Reduktionsmitteltanks oder Behälters aufzukleben, was eine sehr einfache und preiswerte Montage ermöglicht.

Die in sich flexible Baugruppe kann somit in einem einzigen Fertigungsschritt fest mit der Innenwand des Vorratsbehälters verbunden werden. Hierdurch ergibt sich eine besonders einfache Integration der Füllstands- und/oder Qualitätsüberwachung in den Behälter insbesondere den Reduktionsmitteltank eines Abgasnachbehandlungssystems.

Vorzugsweise sind die Elektroden und/oder Sensoren über die Anschlüsse mit einer Auswerteeinheit verbunden, die dazu eingerichtet ist, aus auftretenden Potentialdifferenzänderungen zwischen Elektrodenpaaren die Füllstandshöhe und/oder aus Sensorsignalen ein Maß für die Medienqualität der Flüssigkeit zu ermitteln.

Hierdurch wird im Falle der Anwendung bei Fahrzeugen die vom Gesetzgeber geforderte sogenannte Onboard-Diagnose ermöglicht, indem eine Auswerteeinheit vorgesehen ist, die aus den Messwerten der Anordnung zur Füllstandsmessung und/oder Medienqualitätsüberwachung unmittelbar den Tankfüllstand und/oder die Medienqualität ermittelt.

Dabei können entsprechende Speichermittel vorgesehen sein, um die kontinuierlich oder periodisch durchgeführten Messungen respektive die Auswertungsergebnisse aus diesen Messungen dauerhaft und insbesondere auslesbar zu speichern, um eine spätere Überprüfung zu ermöglichen.

Durch die Überwachung der Medienqualität ist es somit im Falle der Überwachung eines Reduktionsmitteltanks eines Abgasnachbehandlungssystems gewährleistet, dass nicht etwa zur Senkung der Betriebskosten einfaches Wasser in den Reduktionsmitteltank eingefüllt wird, da sowohl die Füllstandsmessung als auch in dem Falle, dass zusätzlich ein Sensor zur Erfassung der Medienqualität angeordnet ist, eine Manipulation ausgeschlossen ist, da die Anordnung vorzugsweise in dem Reduktionsmittelbehälter selbst angebracht wird.

Besonders vorteilhaft bei dem erfindungsgemäßen Reduktionsmittelbehälter eines Abgasnachbehandlungssystems eines Verbrennungsmotors oder dergleichen zur Aufnahme und Bevorratung eines Reduktionsmittels ist es somit, dass der Behälter innen eine erfindungsgemäße Anordnung zur Füllstandsmessung aufweist.

In einer bevorzugten Ausführungsform des Reduktionsmittelbehälters ist eine Auswerteeinheit angeordnet, die mit den Anschlüssen der Anordnung zur Füllstandsmessung verbunden ist, und mittels derer eine Auswertung der zwischen den Elektroden anliegenden elektrischen Potentialdifferenzen zur Ermittlung des Füllstandes in dem Behälter und/oder eine Auswertung der Signale eines Sensors zur Ermittlung der Stoffqualität des Reduktionsmittels erfolgt, insbesondere eine Analogdigitalwandlung der Elektroden, Spannung und/oder Sensorsignale durchgeführt wird, und insbesondere einer Weiterverarbeitung der Daten zur Verfügung gestellt wird.

Vorzugsweise ist die Sensoranordnung mit einer Behälterinnenwand verbunden. Insbesondere kann die Sensoranordnung selbstklebend oder mit einem Zusatzstoff an einer Behälterinnenwand aufgeklebt sein. Hierdurch ist eine besonders einfache Montage möglich.

Besonders vorteilhaft ist der Einsatz eines erfindungsgemäßen Reduktionsmittelbehälters sowie der erfindungsgemäßen Anordnung zur Füllstandsmessung im Rahmen eines Systems zur Abgasnachbehandlung bei Brennkraftmaschinen, Verbrennungsmotoren und dergleichen zur selektiven katalytischen Reduktion von Stickoxiden in dem Abgas mittels eines SCR-Katalysators, wobei sowohl die Füllstandshöhe in dem Reduktionsmitteltank als auch vorzugsweise eine Stoffeigenschaft des eingesetzten Reduktionsmittels, insbesondere die elektrische Leitfähigkeit und/oder die Schallgeschwindigkeit des Reduktionsmittels, insbesondere einer wässrigen Harnstofflösung, erfasst und überwacht wird.

Die Anwendung bzw. Verwendung der erfindungsgemäßen Anordnung zur Füllstandsmessung und des erfindungsgemäßen Reduktionsmittelbehälters ist dabei nicht auf Fahrzeuge, insbesondere Nutzfahrzeuge, Baumaschinen und dergleichen beschränkt, sondern ist vielmehr auch einsetzbar bei sonstigen Feuerungsanlagen, Müllverbrennungsanlagen, Gasturbinen, Industrieanlagen und stationären Motoren. Die Anwendung bei Nutzfahrzeugen ist jedoch eine besonders bevorzugte Anwendung der Erfindung.

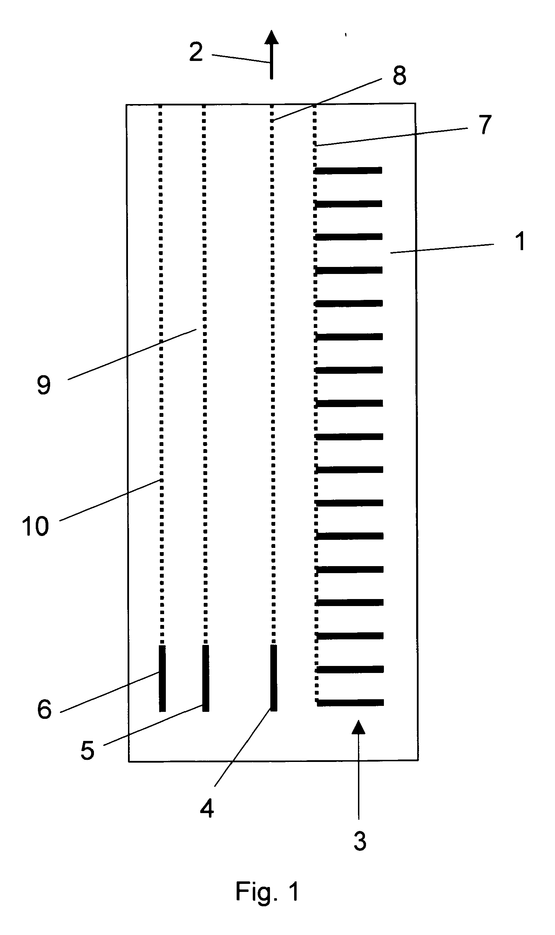

Ein Ausführungsbeispiel einer erfindungsgemäßen Anordnung zur Füllstandsmessung ist in der Figur dargestellt und wird nachfolgend näher erläutert. Es zeigt
- Fig. 1: eine schematische Draufsicht auf eine Anordnung zur Füllstandsmessung einer elektrisch leitfähigen Flüssigkeit in einem Behälter.

Die Anordnung zur Füllstandsmessung und Qualitätsüberwachung des eingesetzten Reduktionsmittels bei einem Abgasnachbehandlungssystem ist gebildet durch ein flexibles Trägermedium 1, welches eine biegsame Kunststoffplatine bildet. Diese flexible Platine 1 besteht aus einem Elastomer. In die Platine 1 sind eingebettet, die durch ausgezogene Linien dargestellten Elektroden bzw. Sensoren sowie die durch punktierte Linien dargestellten isolierten Leiterbahnen.

In der vertikalen Erstreckung 2 weist die Platine 1 eine Mehrzahl von beabstandet angeordneten Elektroden 3 auf, die der Füllstandsmessung dienen. In der mit dem Bezugszeichen 3 gekennzeichneten Reihe sind eine Mehrzahl von Elektroden in vertikaler Richtung 2 voneinander beabstandet übereinander angeordnet. Diese Elektroden 3 weisen jeweils eine nicht isolierte Kontaktfläche zur Kontaktierung der elektrisch leitfähigen Flüssigkeit insbesondere des Reduktionsmittels in dem Behälter auf. Der Elektrodenreihe 3 ist eine gemeinsame Gegenelektrode 4 im vertikal unteren Bereich der flexiblen Platine 1 gegenübergestellt.

Je nachdem, welche Elektrode der Elektrodenreihe 3 in Abhängigkeit der Füllstandshöhe innerhalb des Tanks benetzt ist, ergibt sich eine entsprechende Potentialdifferenz einer bestimmten, einzelnen Elektrode der Elektrodenreihe 3 gegenüber der Gegenelektrode 4, die über eine entsprechende Auswerteeinheit auswertbar ist. Über Leiterbahnen 7, 8, die stauch- und dehnbar in die flexible Platine 1 eingebettet sind, sind die Elektrodenreihe 3 über die Leiterbahn 7 sowie die Gegenelektrode 4 über die Leiterbahn 8 mit entsprechenden Anschlussbereichen verbunden, sodass die Signale zu einem Steuergerät oder einer Auswertelektronik, wie durch den Pfeil 2 dargestellt, weitergegeben werden können. Dabei ist jede einzelne Elektrode der Elektrodenreihe 3 über eine gesonderte Leiterbahn kontaktiert, wobei aus Gründen der Darstellung in Fig. 1 nur eine Leiterbahn 7 dargestellt ist.

Ferner ist im vertikal gesehenen unteren Bereich der flexiblen Platine 1 ein Sensor zur Qualitätsmessung angeordnet. Dieser Sensor zur Qualitätsmessung ist gebildet durch zwei Elektroden 5, 6, die eine Kontaktfläche zur Kontaktierung der elektrisch leitfähigen Flüssigkeit aufweisen und mittels derer die elektrische Leitfähigkeit der Flüssigkeit innerhalb des Tanks ermittelt wird. Die Elektroden 5, 6 des Qualitätssensors sind über ebenfalls isolierte Leiterbahnen 9, 10 mit zugehörigen Anschlussbereichen verbunden. Über die Anschlussbereiche der Leiterbahnen 9, 10 ist eine Verbindung zu einer Auswerteelektronik oder einem Steuergerät möglich, mittels dessen eine Auswertung der mit den Elektroden 5, 6 gemessenen elektrischen Leitfähigkeit des eingefüllten Mediums erfolgt.

Die Füllstandsmessung sowie die Qualitätsüberwachung des eingefüllten Mediums erfolgt somit ohne mechanisch bewegliche Teile. Alle Messelemente 3, 4 sowie 5, 6 sind integriert und in ein flexibles Trägermedium 1 in Form einer flexiblen Kunststoffplatine eingebettet. Für die Füllstandsmessung können dabei sowohl resistive als auch kapazitive Schaltstufen eingesetzt werden. Beide Messverfahren zielen letztendlich darauf ab, eine Spannungsänderung am Eingang eines Mikrokontrollers zu erzeugen, die mittels Analogdigitalwandlung zur Weiterverarbeitung bereitgestellt werden können. Die Weiterleitung der Messdaten von der Platine 1 erfolgt durch den angedeuteten Pfeil 2 zu einem entsprechenden, nicht dargestellten Steuergerät des Abgasnachbehandlungssystems. Am oberen Ende der biegsamen Platine 1 sind die Leiterbahnen 7, 8, 9, 10 dazu mit nicht dargestellten Anschlüssen zur Kontaktierung mit einer Auswerteeinheit versehen.

Ferner ist es möglich, die für eine Ultraschallmessung erforderlichen Grenzflächen ebenfalls auf das flexible Trägermedium 1 aufzubringen. Herstellungsverfahren für die Platine 1 mit sämtlichen eingebetteten Leiterbahnen 7, 8, 9, 10 sowohl den Elektroden 3, 4 und 5, 6 sind vorzugsweise Drucken oder Sputtern.

Die in sich flexible Baugruppe kann wiederum in einem weiteren Fertigungsschritt fest mit der Innenwandung des Reduktionsmitteltanks eines Abgasnachbehandlungssystems verbunden werden, beispielsweise durch Aufkleben auf eine Tankinnenwand.

## Patentansprüche

1. Anordnung zur Füllstandsmessung einer elektrisch leitfähigen Flüssigkeit in einem Behälter, insbesondere zur Füllstandsmessung in einem Reduktionsmitteltank eines Abgasnachbehandlungssystems, wobei eine Mehrzahl von Elektroden (3, 4) in vertikaler Richtung (2) übereinander voneinander beabstandet angeordnet sind, sodass aus einer durch die Überbrückung des Abstandes zwischen zwei Elektroden (3, 4) mit der leitfähigen Flüssigkeit resultierenden Änderung der elektrischen Potentialdifferenz zwischen den beiden Elektroden (3, 4) der Füllstand ableitbar ist, wobei die Elektroden (3, 4) über Leiterbahnen (7, 8) mit Anschlüssen verbunden sind, **dadurch gekennzeichnet, dass** die Elektroden (3, 4) und Leiterbahnen (7, 8) in ein flexibles Trägermedium (1) eingebettet sind und die Leiterbahnen (7, 8) dehn- und stauchbar sind.

2. Anordnung nach Anspruch 1, **dadurch gekennzeichnet, dass** jeweils zwei benachbarte Elektroden ein Paar von Elektrode und Gegenelektrode bilden.

3. Anordnung nach Anspruch 1, **dadurch gekennzeichnet, dass** die in vertikaler Richtung übereinander angeordneten Elektroden (3) eine gemeinsame Gegenelektrode (4) aufweisen.

4. Anordnung nach einem der vorherigen Ansprüche, **dadurch gekennzeichnet, dass** das flexible Trägermedium (1) durch ein Elastomer, insbesondere Ethylen-Propylen-Dien-Kautschuk, gebildet ist.

5. Anordnung nach einem der vorherigen Ansprüche, **dadurch gekennzeichnet, dass** in das Trägermedium (1) zumindest ein Sensor (5, 6) zur Messung einer Stoffeigenschaft der Flüssigkeit sowie mit dem Sensor (5, 6) verbundene dehn- und stauchbare Leiterbahnen (9, 10) eingebettet sind, sodass der Sensor (5, 6) über Anschlüsse der Leiterbahnen (9, 10) mit einer Auswerteeinheit verbindbar ist.

6. Anordnung nach einem der vorherigen Ansprüche, **dadurch gekennzeichnet, dass** in das Trägermedium (1) zumindest ein Sensor (5, 6) zur Messung der elektrischen Leitfähigkeit der Flüssigkeit sowie mit dem Sensor (5, 6) verbundene dehn- und stauchbare Leiterbahnen (9, 10) eingebettet sind, sodass der Sensor (5, 6) über Anschlüsse der Leiterbahnen (9, 10) mit einer Auswerteeinheit verbindbar ist.

7. Anordnung nach einem der vorherigen Ansprüche, **dadurch gekennzeichnet, dass** in das Trägermedium (1) zumindest ein Sensor zur Messung der Schallgeschwindigkeit in der Flüssigkeit sowie mit dem Sensor verbundene dehn- und stauchbare Leiterbahnen eingebettet sind, sodass der Sensor über Anschlüsse der Leiterbahnen mit einer Auswerteeinheit verbindbar ist.

8. Anordnung nach einem der vorherigen Ansprüche, **dadurch gekennzeichnet, dass** die Leiterbahnen (7, 8, 9, 10) durch biegsame Leiter gebildet sind, die in Zickzacklinien oder Wellenlinien in das flexible Trägermedium eingebettet sind.

9. Anordnung nach einem der vorherigen Ansprüche, **dadurch gekennzeichnet, dass** die Elektroden (3, 4) und/oder Sensoren (5, 6) zur Kontaktierung der Flüssigkeit auf dem Trägermedium (1) vorderseitig angeordnet sind und das Trägermedium (1) rückseitig eine selbstklebende Schicht aufweist.

10. Anordnung nach einem der vorherigen Ansprüche, **dadurch gekennzeichnet, dass** die Elektroden (3, 4) und/oder Sensoren (5, 6) über die Anschlüsse mit einer Auswerteeinheit verbunden sind, die dazu eingerichtet ist aus auftretenden Potentialdifferenzänderungen zwischen Elektrodenpaaren die Füllstandshöhe und/oder aus Sensorsignalen ein Maß für die Medienqualität der Flüssigkeit zu ermitteln.

11. Reduktionsmittelbehälter eines Abgasnachbehandlungssystems eines Verbrennungsmotors oder dergleichen, **dadurch gekennzeichnet, dass** der Behälter innen eine Anordnung zur Füllstandsmessung nach einem der vorherigen Ansprüche aufweist.

12. Reduktionsmittelbehälter nach Anspruch 11, **dadurch gekennzeichnet, dass** eine Auswerteeinheit angeordnet ist, die mit den Anschlüssen der Anordnung zur Füllstandsmessung verbunden ist und mittels derer eine Auswertung der zwischen den Elektroden anliegenden elektrischen Potentialdifferenzen zur Ermittlung des Füllstandes in dem Behälter und/oder eine Auswertung der Signale eines Sensors zur Ermittlung der Stoffqualität des Reduktionsmittels erfolgt, insbesondere eine Analog-Digitalwandlung der Elektroden- und/oder Sensorsignale durchführt.

13. Reduktionsmittelbehälter nach Anspruch 11 oder 12, **dadurch gekennzeichnet, dass** die Sensoranordnung mit einer Behälterinnenwand verbunden, insbesondere aufgeklebt, ist.
